Europäisches Patentamt

European Patent Office

Office européen des brevets

(11) Publication number: **0 504 989 A1**

## EUROPEAN PATENT APPLICATION

(21) Application number: **92200712.5**

(22) Date of filing: **12.03.92**

(51) Int. Cl.5: **G07F 7/02**, G07F 7/08, G06K 19/12

(30) Priority: **19.03.91 BE 9100255**

(43) Date of publication of application:
**23.09.92 Bulletin 92/39**

(84) Designated Contracting States:
**AT BE CH DE DK ES FR GB GR IT LI LU MC NL PT SE**

(71) Applicant: **BELL TELEPHONE MANUFACTURING COMPANY Naamloze Vennootschap**
**Francis Wellesplein 1**
**B-2018 Antwerp(BE)**

(72) Inventor: **Heirbaut, Edmond Marie**
**Farnèselaan 4**
**B-9120 Beveren(BE)**
Inventor: **Taeymans, Jean Renier Joseph Marie Thérèse**
**Sint-Jan Vianneystraat 47**
**B-2610 Wilrijk(BE)**

(74) Representative: **Vermeersch, Robert et al**
**BELL TELEPHONE MANUFACTURING COMPANY Naamloze Vennootschap Patent Department Francis Wellesplein 1**
**B-2018 Antwerpen(BE)**

(54) **Magnetic card.**

(57) Magnetic card (1) provided with a narrow magnetic tape (2) following a non-rectilinear path and storing data which, in case the card is a debit card, is function of a predetermined amount of credit which is decreased each time the card is used. Because the narrow magnetic tape is non-rectilinear it is difficult to cut it in parallel strips due to which also fraudulent operations using such strips are made difficult.

The present invention relates to a magnetic card provided with a magnetic tape storing data.

Such a magnetic card with a rectilinear magnetic tape thereon is already known in the art and a possible fraudulent operation with such a magnetic card is to cut the magnetic tape into several narrow and parallel longitudinal strips, e.g. by means of a knife running along a ruler, to subsequently remove all but one of these strips from the magnetic card, and to finally fix these magnetic strips on distinct other cards. The latter cards so obtained may generally all be used in the same way as the original one since they all carry the same data, e.g. an identity code, on their magnetic strip and, because of its high sensitivity, the read/ write head of a crediting, e.g. a payphone, accepting these magnetic cards is generally still able to process the data of the magnetic strip although the latter is narrow.

An object of the present invention is to provide a magnetic card preventing such a fraudulent operation.

According to the invention, this object is achieved due to the fact that said magnetic tape follows a non-rectilinear path.

In this way, the above mentioned cutting operation and therefore also the fraudulent operation become much more difficult to perform.

Another characteristic feature of the present invention is that said magnetic card is a debit card and that said data are function of a predetermined amount of credit.

Such a debit card is also already known in the art and when it is delivered, against payment, to a user, the stored amount of credit has a positive value generally equal to a maximum value. Each time the user uses his card in a crediting device, the amount of credit stored on the card is decreased. To this end, the credit device successively translates the data into a corresponding amount of credit, decreases this amount of credit in function of the service offered by the device, e.g. a phone call, and writes on the magnetic tape new data corresponding to the thus decreased amount of credit.

When after a certain number of uses the amount of the credit stored on the card become zero, the user can no longer use his debit card and the latter needs to be replaced or to be refreshed, e.g. by bringing the amount of credit to a positive value.

Another possible fraudulent operation, similar to the one described above but performed with such a debit card, e.g. when the amount of credit is maximum or at least has a high positive value, is to cut the rectilinear magnetic tape into several narrow and parallel longitudinal strips, to subsequently remove all but one from the debit card and to finally use the latter with the only one remaining narrow magnetic strip thereon. When the amount of credit stored on this one narrow magnetic strip become zero, this strip is replaced by one of the previously removed magnetic strips and as this strip also carry the maximum amount of credit the debit card can be used again. In this way a same debit card can be used several times with the same single maximum amount of credit.

Owing to the invention and for the reasons already explained above, also this fraudulent operation becomes much more difficult to perform when the magnetic tape follows a non- rectilinear path.

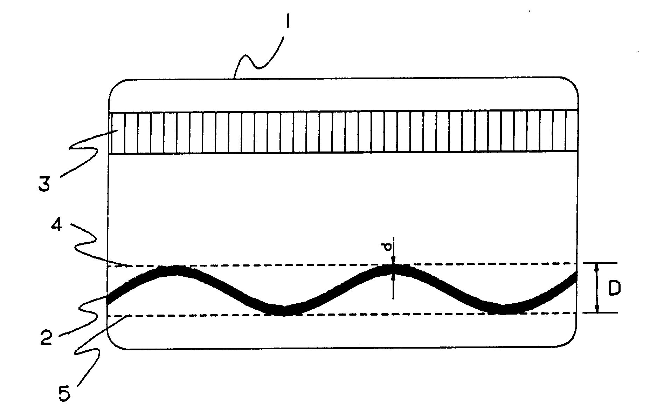

The above mentioned and other objects and features of the invention will become more apparent and the invention itself will be best understood by referring to the following description of an embodiment taken in conjunction with the accompanying drawing which shows a magnetic card according to the invention.

The magnetic card 1 shown in the drawing is a debit card which carries a narrow magnetic tape 2 and a bar- code path 3. It may be used as payment means in credit devices (not shown), e.g. payphones, controlled by such debit cards.

The magnetic tape 2 has a width d between 0.5 mm and 3 mm, typically 2 mm, and follows a non- rectilinear path which varies between two rectilinear parallel lines 4 and 5 located at a distance D. This distance D corresponds to the width of the read/ write head (not shown) of the credit device. This head is used for reading data from and for writing data on the magnetic tape 2, as will be explained below.

The magnetic tape 2 of the debit card 1 carries a 64 bit message which, for security reasons, is encrypted by using a "secret key", e.g. according to the known Data Encryption System (DES) of the US National Security Agency (NSA). This encrypted message is distributed in a redundant way over the magnetic tape 2 and comprises 250 information bits.

The 64 bits of the message include 24 identity bits which are different for each debit card, 12 credit bits indicating the amount of the credit still available, and 28 information bits freely usable. As will be described later, only the 12 credit bits may be modified by the credit device during a write operation thereof.

The identity code of 24 identity bits identifying each debit card 1 and forming part of the above 64 bit message stored on the magnetic tape 2 corresponds to another identity code which can be derived from 12 digits encoded under the form of a bar- code provided on the bar- code path 3 of the debit card 1.

When a user of the debit card 1 inserts the latter into a credit device, e.g. a payphone, the read/ write thereof first reads the 24 identity bits from the magnetic tape 2, while a bar- code reader (not shown) also forming part of the credit device reads the 12 digits from the bar- code path 3. These two data, i.e. the 24 identity bits and the 12 digits, are then decoded by the credit device according to predetermined algorithms using secret keys. The card is considered to be valid and the service requested by the user of the debit card is offered by the credit device only when the two codes match.

The read/ write head of the credit device then reads the 12 credit bits from the magnetic tape 2 and these 12 bits are translated into an amount of credit which may be used for further controlling this device. While the credit device offers a service, e.g. a phone call, to the user, the amount of credit is decreased by a value which is function of this service, e.g. of the destination and of the duration of the phone call. When the service is completed, the remaining amount of credit is translated by the credit device into 12 other credit bits which are then written by the read/ write head thereof on the magnetic tape 2 of the debit card 1.

Summarizing, each time the debit card 1 is used the credit device first checks the validity of the card 1 by comparing the 12 digits of the bar-code with the 24 identity bits of the magnetic tape 2 and, when these data match, the amount of credit represented by the 12 credit bits is successively read, decreased and replaced by a new (lower) amount which is then written on the magnetic tape 2 under the form of 12 new credit bits.

It is to be noted that the bar- coded path 3 may covered by an optical mask, e.g. a dark film, in which case this bar- code can only be read by infra red means with which the credit device has then to be equipped.

While the principles of the invention have been described above in connection with specific apparatus, it is to be clearly understood that this description is made only by way of example and not as a limitation on the scope of the invention.

## Claims

1. Magnetic card (1) provided with a magnetic tape (2) storing data, characterized in that said magnetic tape (2) follows a non- rectilinear path.

2. Magnetic card according to claim 1, characterized in that said magnetic card (1) is a debit card and that said data is function of a predetermined amount of credit.

3. Magnetic card according to claim 1, characterized in that the width (d) of said magnetic tape (2) is comprised between 0.5 mm and 3 mm.

4. Magnetic card according to claim 1, characterized in that said non- rectilinear path (2) varies between two parallel boundary lines (4, 5).

5. Magnetic card according to claim 1, characterized in that said magnetic tape (2) stores at least variable data which may be read and written.

6. Magnetic card according to claims 2 and 5, characterized in that said variable data represent said predetermined amount of credit.

7. Magnetic card according to claim 1, characterized in that said data is encrypted according to a predetermined algorithm.

8. Magnetic card according to claim 1, characterized in that said magnetic tape (2) stores an identity code identifying said magnetic card (1).

9. Magnetic card according to claim 1, characterized in that said magnetic card (1) also carries a bar-code (3) the bar-code identifying said card.

10. Magnetic card according to claims 8 and 9, characterized in that said card is valid when the identities provided by said bar-code and said identity code are matching to validate said magnetic card (1).

11. Magnetic card according to claim 9, characterized in that said bar- code path (3) is covered by an optical mask which prevents said path to be fraudulently read.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-1 948 855 (CROUZET)<br>* the whole document * | 1,8 | G07F7/02<br>G07F7/08<br>G06K19/12 |
| A | | 3-5 | |
| | --- | | |
| Y | GB-A-1 601 362 (EMI)<br>* page 1, line 52 - page 2, line 3 *<br>* page 5, line 103 - page 6, line 23; claims 1,8; figure 5A * | 1,8 | |
| A | | 2 | |
| | --- | | |
| A | FR-A-2 382 541 (THE GOVERNOR AND COMPANY OF THE BANK OF ENGLAND)<br>* page 7, line 15 - page 9, line 4; figures 5-9 * | 1,4 | |
| | --- | | |
| A | DE-A-3 708 270 (GLORY KOGYO)<br>* column 3, line 8 - column 5, line 7; figures * | 1,2,5-11 | |
| | --- | | |
| A | GB-A-2 188 475 (TOSHIBA)<br>* abstract; figures * | 1,2,8 | |
| | --- | | TECHNICAL FIELDS SEARCHED (Int. Cl.5) |
| A | EP-A-0 031 060 (BASF) | | |
| | ----- | | G07F<br>G07D<br>G06K |

The present search report has been drawn up for all claims

| Place of search | Date of completion of the search | Examiner |
|---|---|---|
| THE HAGUE | 18 JUNE 1992 | DAVID J.Y.H. |